# EUROPÄISCHE PATENTSCHRIFT

(11) **EP 2 344 342 B1**
(45) Veröffentlichungstag und Bekanntmachung des Hinweises auf die Patenterteilung: **03.04.2013**
(21) Anmeldenummer: 09740263.0
(22) Anmeldetag: 29.09.2009
(51) Int. Cl.: B42D 15/10

(54) **KARTE MIT EINGEBETTETEM SICHERHEITSELEMENT**
CARD HAVING EMBEDDED SECURITY ELEMENT
CARTE À ÉLÉMENT DE SÉCURITÉ INTÉGRÉ

(30) Priorität: 30.09.2008 DE 102008049631
(43) Veröffentlichungstag der Anmeldung: 20.07.2011
(73) Patentinhaber: Giesecke & Devrient GmbH, 81677 München (DE)
(72) Erfinder: ENDRES, Günter, 81547 München (DE); OWEGER, Bernd, 83703 Gmund (DE); STAHL, Jürgen, Karl, 803335 München (DE); SALZER, Tobias, 82008 Unterhaching (DE)
(74) Vertreter: Klunker . Schmitt-Nilson . Hirsch
(86) Internationale Anmeldenummer: PCT/EP2009/007007
(87) Internationale Veröffentlichungsnummer: WO 2010/037526

(56) Entgegenhaltungen:
- WO-A1-94/11203
- WO-A2-2005/038499
- DE-A1- 10 013 410

## Beschreibung

Die Erfindung betrifft eine mehrschichtige Karte, insbesondere Kreditkarte, Bankkarte oder Ausweiskarte wie Personalausweis, Führerschein oder sonstiges Identifizierungsdokument, die ein Sicherheitselement mit Reliefstrukturen, die offene und versteckte Darstellungen erzeugen, aufweist, sowie ein Verfahren zur Herstellung der Karte.

Karten, die aus Gründen unterschiedlicher Art einen Wertgegenstand darstellen, wie Bankkarten, Kreditkarten oder Ausweiskarten, müssen gegen Fälschung geschützt werden. Zur Sicherung derartiger Wertkarten gegen Fälschung werden gerne Sicherheitselemente mit Sicherheitsmerkmalen in Form von Reliefstrukturen, beispielsweise Prägehologrammen, deren Herstellung einen beträchtlichen technologischen Aufwand erfordert, eingesetzt. Ein Grund für die Beliebtheit derartiger Sicherheitselemente ist, dass die durch die Beugungsstrukturen oder Brechungsstrukturen hervorgerufenen optischen Effekte auch durch modernste Kopiergeräte nicht reproduziert werden können, aber von einem Betrachter recht einfach geprüft werden können.

Meist werden die Reliefstrukturen aufweisenden Sicherheitselemente auf eine Außenoberfläche der Karte aufgeklebt. Es gibt Verklebungstechniken, die ein sehr dauerhaftes Fixieren der Sicherheitselemente auf der Kartenoberfläche ermöglichen, so dass eine zerstörungsfreie Ablösung eines aufgeklebten Sicherheitselements nahezu nicht möglich ist. Auf einer Außenoberfläche einer Karte aufgeklebte Sicherheitselemente sind allerdings beim Kartengebrauch einer starken Abnutzung unterworfen, und insbesondere bei häufig benutzten Karten oder Karten, die sehr lange in Benutzung sind, wie Ausweiskarten, werden die Reliefstrukturen innerhalb einer zu kurzen Zeitspanne durch Abrieb und sonstige mechanische Belastungen so in Mitleidenschaft gezogen, dass die optischen Effekte verloren gehen.

Es wurde daher versucht, Sicherheitselemente mit Reliefstrukturen ins Innere der Karten einzubetten, damit die Sicherheitselemente durch Kartenschichten vor mechanischer Abnutzung geschützt werden. Allerdings ist ein zwischen Kartenschichten einzubettendes Sicherheitselement während des Laminiervorgangs der Kartenschichten der Einwirkung von Wärme und Druck ausgesetzt, und dadurch wird die Qualität der Reliefstrukturen so stark beeinträchtigt, dass die optischen Effekte nicht mehr als Sicherheitskennzeichnung dienen können. Zur Vermeidung einer Beschädigung der Reliefstrukturen während des Laminiervorgangs wurde vorgeschlagen, die Kartenbereiche, in denen sich ein Sicherheitselement mit Reliefstrukturen befindet, beim Laminieren weniger hohen Temperaturen und einem geringeren Druck auszusetzen. Ein derartiges Verfahren ist beispielsweise in EP 0 013 557 A2 beschrieben. Durch die schonendere Behandlung der Sicherheitselementbereiche während des Laminierens wird jedoch nur eine geringfügige Verbesserung erzielt, was die Beibehaltung der Qualität der Reliefstruktur betrifft, und diese Verbesserung wird erkauft mit einem schlechteren Folienverbund in den schonender behandelten Kartenbereichen, der sich negativ auf die visuelle Erkennbarkeit der Sicherheitsmerkmale des Sicherheitselements auswirkt und zudem im Laufe der Zeit zu einem Aufspalten der Kartenschichten in diesem Bereich führen kann.

Besondere Probleme ergeben sich jedoch bei Sicherheitselementen, die Reliefstrukturen mit ersten und zweiten Bildelementen aufweisen, wobei die ersten Bildelemente für den Betrachter eine erste, sogenannte "offene" Bildinformation (Darstellung) erzeugen und die zweiten Bildelemente für den Betrachter unter Einsatz eines geeigneten Hilfsmittels eine zweite, sogenannte "versteckte" Bildinformation (Darstellung) erzeugen. Im Weiteren werden die ersten bzw. zweiten Bildelemente auch als "offene" bzw. "versteckte" Bildelemente bezeichnet. Bei Betrachtung des Sicherheitselements kann ein Betrachter ohne Hilfsmittel nur die offene Bildinformation (Darstellung) erkennen, die durch Wechselwirkung des einfallenden Lichts mit den offenen Bildelementen des Sicherheitselements erzeugt wird. Hingegen sind zum Auslesen der versteckten Bildinformation des Sicherheitselements, d.h. zum Erkennen der versteckten Darstellung, spezielle Hilfsmittel erforderlich. Sicherheitselemente mit Reliefstrukturen, insbesondere Beugungsstrukturen, mit offener und versteckter Bildinformation weisen einen sehr hohen Grad an Fälschungssicherheit auf. Man hat hier quasi ein einen Gegenstand gegen Fälschung schützendes Sicherheitsmerkmal (die durch die offenen Bildelemente erzeugte offene Darstellung), das seinerseits durch ein internes Sicherheitsmerkmal (die durch die versteckten Bildelemente erzeugte versteckte Darstellung) gegen Fälschung geschützt ist.

Dokument DE-A-10013410 offenbart eine Karte nach dem Oberbegriff des Anspruchs 1.

Sicherheitselemente mit einer Beugungsstruktur, die erste und zweite Bildelemente zur Erzeugung einer offenen bzw. versteckten Bildinformation aufweisen, können z. B. nach den in der WO 2005/038499 A2 beschriebenen Verfahren hergestellt werden. In Bezug auf Sicherheitselemente mit ersten und zweiten Bildelementen zur Erzeugung einer offenen bzw. versteckten Bildinformation sowie in Bezug auf deren Herstellung wird die Offenbarung der WO 2005/038499 A2 ausdrücklich zum Gegenstand der vorliegenden Anmeldung gemacht.

Aus der WO 2005/038499 A2 ist es bekannt, die ersten und zweiten Bildelemente mit geeigneten Prägehöhen als Reliefstruktur in eine prägefähige Schicht einzuprägen. Aus der WO 2005/038499 A2 ist es ferner bekannt, dass insbesondere die Reliefstruktur der zweiten Bildelemente, die die versteckte Information (Hidden Image) erzeugen, sehr empfindlich gegen äußere Einflüsse, wie z.B. Abnutzung oder Knittern, ist. Die Empfindlichkeit der die versteckte Bildinformation erzeugenden Reliefstrukturen ist auch darauf zurückzuführen, dass diese in der Regel außerordentlich fein sind, um die offenen Bildelemente des Sicherheitselements und damit die vom Betrachter wahrgenommene offene Darstellung nicht zu beeinträchtigen.

Die in der Regel extrem feinen Strukturen einer versteckten Bildinformation, die z. B. durch erste Bildelemente mit einer geringeren Prägetiefe als die Prägetiefe der zweiten Bildelemente charakterisiert sein können, sind nicht nur extrem empfindlich gegen mechanische Beanspruchungen, wie Abrieb oder Knittern, sondern auch gegen Temperaturbelastungen. Werden Sicherheitselemente mit Beugungsstrukturen mit sichtbarer sowie versteckter Bildinformation in den Schichtverbund einer Karte mit mehreren laminierten Schichten einlaminiert, so werden die die versteckte Darstellung erzeugenden Bildelemente durch die zum Laminieren benötigten Drücke und Temperaturen schwer beschädigt oder gänzlich zerstört.

Eine Verringerung des Laminierungsdrucks und der Laminierungstemperatur im Bereich des Sicherheitselements, wie in EP 0 013 557 beschrieben, führt, wie bereits erläutert, zu einem schlechteren Folienverbund in diesem Bereich und beeinträchtigt die visuelle Erkennbarkeit der Sicherheitsmerkmale des Sicherheitselements, insbesondere die Detektierbarkeit der versteckten Darstellung, soweit diese nicht trotz der schonenderen Behandlung zerstört wird.

Auch der Verzicht auf das Einlaminieren ins Innere des Schichtverbunds einer Karte stellt keine Lösung des Problems dar. Sicherheitselemente, die im wesentlichen ohne Druck- und Temperaturbelastung auf eine Außenoberfläche einer Karte aufgeklebt werden, bieten weniger Fälschungsschutz, da sie im Gegensatz zu einem einlaminierten Sicherheitselement unter Umständen entfernt werden können. Außerdem sind solche Sicherheitselemente wegen des fehlenden Schutzes durch eine Kartenfolie einem höheren Verschleiß ausgesetzt, der dazu führen kann, dass die versteckte Bildinformation bald nicht mehr detektiert, d. h. mit Hilfsmitteln sichtbar gemacht, werden kann.

Es besteht also das Problem, dass es mit den bisherigen Verfahren des Stands der Technik nicht möglich ist, ein Sicherheitselement mit ersten und zweiten Bildelementen, die eine offene bzw. versteckte Bildinformation erzeugen, so an einer Karte anzubringen, dass es nicht ohne Beschädigung entfernt werden kann, und die empfindlichen Strukturen weder durch das Aufbringungsverfahren des Sicherheitselements noch durch längeren Gebrauch der Karte beschädigt werden und gut sichtbar bzw. gut detektierbar sind. Das scheinbar unlösbare Dilemma ist: ein hoher Grad an Fälschungssicherheit macht versteckte Bildinformationen wünschenswert und erfordert das Einlaminieren des Sicherheitselements in den Schichtaufbau einer Karte. Unter Laminierungsbedingungen werden die feinen Strukturen der versteckten Bildinformation aber regelmäßig zerstört. Andererseits beeinträchtigen besonders schonende Laminierungsbedingungen die visuelle Erkennbarkeit bzw. Detektierbarkeit der Sicherheitsmerkmale und die Verbundfestigkeit des Sicherheitselements im Schichtaufbau der Karte.

Aufgabe der vorliegenden Erfindung ist es daher, eine Karte mit mehreren miteinander laminierten Schichten und mit einem Sicherheitselement, das ein Sicherheitsmerkmal auf der Basis von Reliefstrukturen, insbesondere Beugungsstrukturen, mit ersten, offenen und zweiten, versteckten Bildelementen, die eine erste, offene bzw. eine zweite, versteckte Darstellung (Bildinformation) erzeugen, bereitzustellen, die einen hohen Grad an Fälschungssicherheit aufweist.

Aufgabe der vorliegenden Erfindung ist es außerdem, eine derartige Karte bereitzustellen, bei der das Sicherheitselement eine hohe Verbundfestigkeit im Schichtaufbau der Karte aufweist.

Aufgabe der vorliegenden Erfindung ist es ferner, eine derartige Karte bereitzustellen, bei der eine gute visuelle Erkennbarkeit der Sicherheitsmerkmale des Sicherheitselements, und insbesondere eine gute Detektierbarkeit der versteckten Bildinformation, garantiert ist.

Aufgabe der vorliegenden Erfindung ist es darüber hinaus, ein Verfahren zur Herstellung einer derartigen Karte bereitzustellen.

Die Aufgaben werden gelöst durch die Karte und das Verfahren, wie sie in den unabhängigen Ansprüchen angegeben sind. Ausführungsformen der Erfindung sind in den jeweiligen abhängigen Ansprüchen angegeben.

Karten im Sinne der vorliegenden Erfindung sind Dokumente, die mehrere, d. h. mindestens zwei miteinander laminierte Schichten aufweisen, und die mittels eines Sicherheitselements gegen Fälschung geschützt werden sollen. Demzufolge fallen unter den Begriff "Karten" grundsätzlich auch Verbundbanknoten, insbesondere mit mindestens zwei miteinander laminierten Schichten aus Papier, papierähnlichen Materialien und/ oder Kunststoffmaterialien. Der im Weiteren verwendete Begriff "Folienverbundbanknote" bezieht sich im Rahmen der vorliegenden Erfindung auf Verbundbanknoten mit mindestens einer, bevorzugt mehreren Folienschichten aus einem Kunststoffmaterial.

Typischerweise bestehen erfindungsgemäße Karten nicht nur aus zwei Schichten, sondern aus einer oder mehreren Kernschichten, die an den äußeren Oberflächen der Kernschicht bzw. des Kernschichtaufbaus jeweils von einer oder mehreren Deckschichten (Overlay-Folien) abgedeckt werden. Die Kernschichten sind bevorzugt opak, damit die Karte insgesamt nicht durchsichtig ist, während die Deckschichten bevorzugt transparent sind, damit Sicherheitselemente und auf der Karte anzubringende Informationen so angebracht werden können, dass sie durch eine Deckfolie geschützt sind und trotzdem gut erkennbar sind. Eine größere Anzahl von Schichten hat außerdem den Vorteil, dass die Karte, deren Gesamtdicke genormt ist, aus Einzelschichten einer Dicke besteht, die problemlos verarbeitet werden kann. Die Kartenschichten bestehen bevorzugt aus Kunststofffolien, beispielsweise aus Polycarbonat, aus Polyethylenterephthalat oder einem anderen Polyester, oder aus Polyvinylchlorid. Die Kartenschichten werden unter erhöhtem Druck und/ oder erhöhter Temperatur miteinander laminiert.

Erfindungsgemäß kann das Sicherheitselement prinzipiell zwischen beliebigen Schichten innerhalb des Schichtaufbaus der Karte eingebettet werden. Natürlich müssen die das Sicherheitselement abdeckenden Kartenfolien transparent sein, zumindest im Bereich des Sicherheitselements, um die Sichtbarkeit des Sicherheitselements zu gewährleisten. Bevorzugt wird das Sicherheitselement nur von einer einzigen transparenten Deckfolie bedeckt.

Das Sicherheitselement weist mindestens ein Sicherheitsmerkmal in Form einer Reliefstruktur auf. Reliefstrukturen sind Beugungsstrukturen oder Brechungsstrukturen, d. h. Strukturen, die elektromagnetische Strahlung, insbesondere sichtbares Licht, beugen oder brechen. Bevorzugt sind Beugungsstrukturen und besonders bevorzugt Hologramme, Kinegramme, Moviegramme, Pixelgramme und andere Strukturen, die optische Beugungseffekte aufweisen. Reliefstrukturen sowie ihre Erzeugung sind bekannt.

Im Folgenden wird im Zusammenhang mit der Reliefstruktur und ihrer Herstellung meist von "Beugungsstruktur" oder von "Hologramm" und "Prägen" gesprochen, da dies die gegenwärtig am meisten bevorzugten Ausführungsformen sind. Dies ist jedoch nicht beschränkend zu verstehen. Die Erfindung umfasst beliebige Reliefstrukturen, insbesondere auch sogenannte Mattstrukturen mit achromatischen Streueffekten, sowie dafür geeignete Herstellungsverfahren.

Die Reliefstruktur bzw. Beugungsstruktur des erfindungsgemäß zu verwendenden Sicherheitselements weist die Besonderheit auf, dass es sich um eine "Doppelstruktur" handelt, d. h. eine Reliefstruktur bzw. Beugungsstruktur ist innerhalb oder in nebengeordneten Flächenbereichen einer anderen Reliefstruktur angeordnet bzw. eingeprägt. Unter "nebengeordneten Flächenbereichen" werden im Rahmen dieser Anmeldung diejenigen Flächenbereiche der ersten Reliefstruktur verstanden, welche für die Erzeugung der offenen Darstellung von untergeordneter Bedeutung sind, wie dies in der WO 2005/038499 A2 beschrieben ist. Im Weiteren wird die Formulierung "Anordnung in nebengeordneten Flächenbereichen" als unter den Begriff "innerhalb" einer anderen (ersten) Reliefstruktur fallend aufgefasst. Die erste Beugungsstruktur erzeugt eine für einen Betrachter ohne Hilfsmittel visuell erkennbare Darstellung, die innerhalb der ersten Beugungsstruktur eingeprägte zweite Beugungsstruktur erzeugt eine für einen Betrachter nicht ohne Hilfsmittel visuell erkennbare versteckte Darstellung.

Beugungsstrukturen mit sowohl sichtbaren als auch versteckten Darstellungen sind prinzipiell bekannt. Eine versteckte Darstellung innerhalb einer visuell erkennbaren Darstellung, wie einem sichtbaren Hologramm, ist beispielsweise dadurch erzeugbar, dass in einem Prägehologramm zusätzliche Prägungen vorgesehen werden. Diese zusätzlichen Prägungen sind in der Regel außerordentlich fein und so ausgebildet, dass sie nur mit geeigneten Hilfsmitteln, wie einem Laser als Strahlungsquelle, eine für einen Betrachter detektierbare "versteckte" Darstellung erzeugen.

Grundsätzlich ist anzumerken, dass die Bereiche der ersten Prägung (erste Bildelemente) und die Bereiche der zusätzlichen Prägung (zweite Bildelemente) auch vollständig zusammenfallen können, d. h. die (zweiten Bildelemente) sind im Wesentlichen im gesamten Bereich der ersten Bildelemente in der Kunststoff- oder Lackschicht des Sicherheitselements angeordnet. Ein solches Sicherheitselement erzeugt im gesamten Bereich der geprägten Kunststoff- oder Lackschicht eine offene Bildinformation und mit einem geeigneten Hilfsmittel eine versteckte Bildinformation. Darüber hinaus sind sämtliche in der WO 2005/038499 A2 beschriebenen Anordnungen von ersten und zweiten Bildelementen denkbar.

Ein Verfahren zur Herstellung einer derartigen Beugungsstruktur, die erste Bereiche und zweite Bereiche aufweist, wobei die ersten Bereiche eine unter Umgebungsbedingungen visuell erkennbare erste Darstellung erzeugen, und die zweiten Bereiche eine unter Umgebungsbedingungen visuell nicht erkennbare zweite Darstellung erzeugen, ist auch in DE 10 2007 012 714 A1, auf die hiermit Bezug genommen wird, offenbart. Gemäß dieser Schrift kann die Prägetiefe der zweiten Bildelemente mit Vorteil kleiner als die Prägetiefe der ersten Bildelemente sein. Bei dem Verfahren wird die Hologrammstruktur, d. h. die Doppelstruktur, zuerst in einer Fotoresistplatte erzeugt, mithilfe der entwickelten Fotoresistplatte eine Prägematrize hergestellt, und mithilfe der Prägematrize ein Sicherheitselement mit einer sichtbaren und einer versteckten Bildinformation hergestellt. Das Einprägen des Hologramms in ein Sicherheitselement erfolgt nach an sich bekannten Verfahren. Ein bevorzugtes Verfahren ist das Einprägen in Kunststofffolien oder Lackschichten, wie es z. B. in EP 0 684 908 A1 beschrieben ist, auf die hinsichtlich Materialien und Verfahren ausdrücklich Bezug genommen wird. Besonders bevorzugt als Materialien für die Beugungsstrukturschichten sind radikalisch und kationisch härtende UV-Lacke.

Sichtbar gemacht werden kann die versteckte Darstellung beispielsweise als virtuelles Bild durch Bestrahlen mit divergentem monochromatischem Licht, wie es ein konventioneller Laserpointer liefert, wie in DE 10 2007 012 714 A1 beschrieben, oder durch Bestrahlung mit einer Lichtquelle, wie einem Laserpointer, und Projizieren der reflektierten Strahlung auf einen Projektions- oder Auffangschirm, wie in WO 2005/038499 A2 beschrieben.

Das Sicherheitselement besteht in seiner einfachsten Version lediglich aus der Kunststofffolie oder Lackschicht mit der eingeprägten Beugungsstruktur. Zur besseren Erkennbarkeit der Beugungsstruktur ist es bevorzugt, auf die Beugungsstruktur eine reflektierende Beschichtung aufzubringen. Geeignete Beschichtungen sind beispielsweise Metallschichten, die bevorzugt durch physikalische Dampfabscheidung aufgebracht werden. Die Metallisierungen können Aussparungen in Form von Mustern, Zeichen oder Codierungen, eine sogenannte "Negativschrift", aufweisen. Der in dieser Anmeldung verwendete Begriff "Negativschrift" umfasst Aussparungen beliebiger Form, also jede Nicht-Vollflächigkeit in einer im Wesentlichen nicht transparenten Beschichtung. Die Negativschrift kann also z. B. in Form von Buchstaben, Zahlen oder Mustern irgendwelcher Art, insbesondere Linienmustern, ausgebildet sein. Anstelle von Metallisierungen können auch Schichten aus Metalleffektfarben oder hochbrechende Schichten aus Materialien wie CaS, CrO₂, ZnSi, TiO₂ oder SiOₓ vorgesehen werden.

Bevorzugt wird über der Metallisierung oder sonstigen reflektierenden Schicht eine Schutzlackschicht aufgebracht. Alternativ kann eine Schutzlackschicht mit hohem Brechungsindex eine reflektierende Schicht ersetzen.

Bevorzugt weist das Sicherheitselement mindestens eine weitere Merkmalsschicht auf. Grundsätzlich kommen alle für Sicherheitsmerkmale bekannten Merkmalsschichten und Schichtkombinationen infrage. Besonders bevorzugt als weitere Merkmalsschicht sind eine Schicht mit Farbkippeffekt, insbesondere ein Dünnschichtaufbau, und eine lichtpolarisierende Schicht, insbesondere eine Schicht mit nematischen Flüssigkristallen, und in einer ganz besonders bevorzugten Ausführungsform weist das Sicherheitselement neben der Beugungsstruktur, die eine sichtbare und eine versteckte Darstellung erzeugt, sowohl eine Schicht mit Farbkippeffekt als auch eine lichtpolarisierende Schicht auf. Die Schicht mit Farbkippeffekt wird bevorzugt mittels einer Kaschierschicht aus einem üblichen Kaschierklebstoff mit einer weiteren Merkmalsschicht des Sicherheitselements verbunden.

Sicherheitsmerkmale mit Farbkippeffekt, also Sicherheitsmerkmale, deren Farbe bei Veränderung des Betrachtungswinkels wechselt, können auf unterschiedliche Weise hergestellt werden, beispielsweise durch Bedrucken mit Druckfarben mit Flüssigkristallpolymerpigmenten oder Iriodinen. Bei der vorliegenden Erfindung werden bevorzugt Dünnschichtelemente verwendet. Der Farbeffekt beruht dabei auf Interferenzeffekten aufgrund von Mehrfachreflexionen in den verschiedenen Teilschichten des Dünnschichtelements und ist beispielsweise in EP 0 395 410 A2 beschrieben. Dünnschichtelemente sind typischerweise aus einer Absorberschicht, einer Reflexionsschicht und einer zwischen der Absorberschicht und der Reflexionsschicht angeordneten Dielektrikumsschicht aufgebaut. Ein Dünnschichtaufbau mit einer relativ einfach herzustellenden Dielektrikumsschicht ist in EP 1658179 B1 beschrieben. In der Druckschrift sind auch geeignete Materialien für die Reflexionsschicht und die Absorberschicht angegeben.

Lichtpolarisierende Merkmalsschichten, sogenannte "Polarisationsmerkmale", sind Sicherheitsmerkmale, die Polarisationseffekte zur Echtheitssicherung nutzen. Lichtreflektierende Oberflächen, beispielsweise metallisierte Hologramme, werden mit einer "Phasenverzögerungsschicht" beschichtet. Phasenverzögerungsschichten sind in der Lage, die Polarisation und Phase von hindurchgehendem Licht zu ändern. Ein Sicherheitselement, das Polarisationseffekte zur Echtheitssicherung nutzt, ist beispielsweise in DE 10 2006 021 429 A1 beschrieben. Bei Betrachtung unter Umgebungslicht sind die Bereiche mit Phasenverzögerungsschicht eines derartigen Sicherheitselements kaum wahrnehmbar, bei Betrachtung unter polarisiertem Licht jedoch, also beispielsweise bei Betrachtung durch einen geeigneten Polarisator, werden die Bereiche mit Phasenverzögerungsschicht erkennbar.

Bei der vorliegenden Erfindung werden die lichtpolarisierenden Schichten bevorzugt aus flüssigkristallinem Material hergestellt, besonders bevorzugt aus nematischen Flüssigkristallen. Um die optischen Effekte gut zur Geltung zu bringen, sollten die flüssigkristallinen Materialien ausgerichtet werden. Daher ist es bevorzugt, als Träger für das lichtpolarisierende Sicherheitsmerkmal eine geeignete Alignmentschicht einzusetzen. Als Alignmentschichten kommen beispielsweise fein strukturierte Schichten, die durch Prägen, Ätzen oder Einritzen hergestellt werden können, Schichten aus linearem Photopolymer oder durch die Ausübung von Scherkräften ausgerichtete Schichten infrage.

Alle Sicherheitsmerkmale des Sicherheitselements können vollflächig oder bereichsweise ausgebildet werden. Bevorzugt bilden die Sicherheitsmerkmale figürliche oder geometrische Muster oder Motive.

Der Grund für die Bevorzugung von Sicherheitselementen mit zusätzlichen Sicherheitsmerkmalen mit lichtpolarisierenden Effekten und Farbkippeffekten liegt zum einen darin, dass zusätzliche Sicherheitsmerkmale die Fälschungssicherheit beträchtlich erhöhen, und zum anderen und insbesondere darin, dass es sich um Sicherheitsmerkmale handelt, deren visuelle Erkennbarkeit durch Einbetten des Sicherheitselements in den Schichtaufbau einer Karte typischerweise beeinträchtigt wird.

Bei der vorliegenden Erfindung tritt hingegen keine derartige Beeinträchtigung auf. Dies liegt an der speziellen Art der Einbettung der Sicherheitselemente in den Folienaufbau. Erfindungsgemäß wird nämlich das Sicherheitselement, das bevorzugt die Form eines flächigen Elements wie eines Folienstreifens oder eines Folienpatches hat, mit beiden Kartenschichten, zwischen denen es eingebettet wird, mittels eines stabilisierenden Klebstoffs verklebt. Geeignete Klebstoffe sind physikalisch trocknende Klebstoffe und wärmevernetzbare Klebstoffe, insbesondere wasserbasierte, wärmevernetzbare Klebstoffe. "Physikalisch trocknend" bedeutet, dass die Trocknung durch Verdunstung des Lösungsmittels und ohne chemische Reaktion stattfindet. Wird ein wärmevernetzbarer Klebstoff verwendet, sollte die Vernetzungstemperatur des Klebstoffs geringer sein als die Erweichungstemperatur der Kunststofffolie oder der Lackschicht des Sicherheitselements, in der die Beugungsstruktur vorliegt. Anzumerken ist ferner noch, dass physikalisch trocknende Kleber mitunter auch zu einem gewissen Teil durch chemische Reaktion härten können. D.h., es sind in der Praxis auch Klebstoffe bekannt, die im Wesentlichen physikalisch trocknend sind, des Weiteren aber auch wärmevernetzbar sind und umgekehrt.

Geeignete physikalisch trocknende Klebstoffe basieren z. B. auf Polyesterharzen, wie z.B. dem Polyesterharz Dynapol L 208 (Degussa), wobei lösemittelhaltige, physikalisch trocknende Klebstoffe besonders bevorzugt sind.

Geeignete wärmevernetzende Klebstoffe basieren z. B. aufAcrylaten, insbesondere Polyurethanacrylaten, wobei durch UV- oder Wärmestrahlung nachvernetzende Klebstoffe besonders bevorzugt sind.

Wie bereits erwähnt, ist eine exakte Trennung zwischen physikalisch trocknenden und wärmevernetzenden Klebstoffsystemen nicht immer möglich, so dass zusammenfassend hier noch einmal geeignete physikalisch und/oder wärmevernetzende Klebstoffsysteme aufgezählt werden. Im Rahmen der vorliegenden Erfindung können Kleber auf wässriger Basis bzw. auf Lösungsmittelbasis der folgenden chemischen Klassen eingesetzt werden: Polyester, Polyacrylate, Urethan-Harze, Methacrylate, Isocyanate, blockierte Isocyanate, Polyvinylchloride (PVC-Harze), Polyvinylbutyrale (PVB-Harze), Polyamide, Keton-Harze, Maleinat-Harze, Dual-Cure-Harze, Ionomerdispersionen, Alkyd-Harze, Phenol-Harze, etc.

Besonders geeignet sind ferner die in der unveröffentlichten deutschen Patentanmeldung DE 10 2009 031877.1 offenbarten Klebstoffe, die als eine Komponente mindestens ein pulverförmiges Antiblockmittel und optional mindestens eine weitere filmbildende Komponente enthalten, wobei das Antiblockmittel durch Wärme und/oder Strahlung und/oder mechanische Einwirkung aktiviert werden kann und nach der Aktivierung in der Lage ist, mit einer Komponente des Klebstoffs und/ oder mit sich selbst eine chemische Reaktion einzugehen. Nach Aktivierung des Antiblockmittels ist das Antiblockmittel in der Lage, mit einer der Hauptflächen des Sicherheitselements und/ oder einer Kartenschicht eine chemische Reaktion einzugehen, um das Sicherheitselement durch Verkleben sicher zwischen die Kartenschichten einzubetten. Sämtliche in der DE 10 2009 031 877.1 offenbarten Klebstoffe können zur Einbettung der in der vorliegenden Anmeldung beschriebenen Sicherheitselement in eine Karte mit Vorteil eingesetzt werden und ermöglichen somit die Herstellung einer erfindungsgemäßen Karte dieser Anmeldung.

Die technische Ursache, warum die Verklebung der Sicherheitselemente mittels dieser Klebstoffe die visuelle Sichtbarkeit bzw. Detektierbarkeit der optischen Sicherheitsmerkmale verbessert und eine Beschädigung durch den Laminierungsvorgang vermeidet, ist noch nicht abschließend geklärt. Jedenfalls ist die erzielte Verbesserung insbesondere bei der Detektierbarkeit der versteckten Bildinformation gegenüber nicht verklebten, aber ansonsten gleichen, einlaminierten Sicherheitselementen dramatisch, und auch die visuelle Erkennbarkeit der anderen genannten optischen Effekte ist signifikant verbessert.

Sehr vorteilhaft ist auch die durch die Verklebung erzielte Verbesserung des Schichtverbunds im Bereich des Sicherheitselements. Durch die Verklebung des Sicherheitselements mit den benachbarten Kartenschichten mittels der genannten Klebstoffe ist es möglich, im Bereich des Sicherheitselements bei der Laminierung niedrigere Drücke und/ oder Temperaturen anzuwenden. Dennoch wird ein guter Schichtverbund erzielt, so dass auch bei längerem Gebrauch der Karte kein Aufspalten der Kartenschichten im Bereich des Sicherheitselements durch Biegebelastungen auftritt, und gleichzeitig stellt man eine klarere Sichtbarkeit bzw. Detektierbarkeit der optischen Effekte fest. Es wird jedoch ausdrücklich darauf hingewiesen, dass die deutliche Erkennbarkeit bzw. Detektierbarkeit der optischen Effekte des Sicherheitselements auch dann erhalten wird, wenn im Bereich des Sicherheitselements keine schonenderen Laminierungsbedingungen angewendet werden.

So kann ein Sicherheitselement mit Sicherheitsmerkmalen, die einen hohen Grad an Fälschungssicherheit garantieren, in den Schichtaufbau einer Karte eingebettet werden und dadurch gegen mechanische Abnutzung und gegen ein eventuelles Entfernen geschützt werden, wobei gleichzeitig eine hervorragende Verbundfestigkeit des Sicherheitselements im Schichtaufbau der Karte und eine verbesserte Sichtbarkeit bzw. Detektierbarkeit der optischen Sicherheitsmerkmale erzielt werden, was wiederum die Fälschungssicherheit erhöht.

Anzumerken ist noch, dass eine oder beide Klebstoffschichten teilweise oder ganz durch eine Lackschicht ersetzt werden kann, die die Brechungsindices der jeweils benachbarten Schichten (z.B. Sicherheitselement und Kartenschicht) angleicht (sogenannter "Index-match"). Solche Lackschichten sind dem Fachmann an sich bekannt, weshalb hier nicht näher darauf eingegangen wird. Der teilweise/vollständige Ersatz einer Klebstoffschicht durch eine solche Lackschicht zur Angleichung der Brechungsindices benachbarter Schichten ermöglicht die Herstellung eines erfindungsgemäßen Gegenstandes mit zahlreichen oben beschriebenen, vorteilhaften Wirkungen, ist aber gegenwärtig nicht bevorzugt

Gemäß einer besonders bevorzugten Ausführungsform werden für die Kunststofffolie oder die Lackschicht des Sicherheitselements, in der die Beugungsstruktur vorliegt, Materialien gewählt, deren Erweichungstemperatur höher liegt (z. B. mindestens 10°C höher) als die Erweichungstemperatur der Kartenschichten, zwischen den das Sicherheitselement eingebettet werden soll. Zumindest sollte die Erweichungstemperatur der Kunststofffolie oder der Lackschicht mit der Beugungsstruktur mindestens so hoch sein wie die Erweichungstemperatur der Kartenschichten, zwischen denen das Sicherheitselement eingebettet werden soll.

Vor der Auftragung des Klebstoffs kann es vorteilhaft sein, zur Verbesserung der Haftungseigenschaften einen Primer auf die zu verklebende Oberfläche oder Oberflächen aufzutragen. Der Primer kann zusätzlich dazu genutzt werden, die Karte mit weiteren Merkmalsstoffen auszustatten, die im Primer enthalten sind. Ebenso wie der Primer kann auch eine der Klebstoffschichten oder können beide Klebstoffschichten zusätzliche Merkmalsstoffe enthalten. Geeignete Merkmalsstoffe sind insbesondere Lumineszenzstoffe, bevorzugt Lumineszenzstoffe, die nur unter UV-Licht oder IR-Licht sichtbar sind und bei Umgebungslicht von einem Betrachter nicht wahrgenommen werden können. Merkmalsstoffe in der Primerschicht und insbesondere der Klebstoffschicht haben den Vorteil, dass sie bei Versuchen, das Sicherheitselement aus dem Schichtverbund zu lösen, teilweise auf dem Sicherheitselement und teilweise auf der Karte verbleiben. Das bedeutet eine Steigerung der Fälschungssicherheit.

Eine weitere Verbesserung der Fälschungssicherheit kann erzielt werden durch Vorsehen einer Beschichtung auf einer der dem Sicherheitselement benachbarten Kartenschichten. Bevorzugt wird die das Sicherheitselement bedeckende, also im fertigen Schichtaufbau der Karte außen liegende, transparente Kartenfolie vor dem Laminieren an ihrer inneren Oberfläche beschichtet. Bei der Beschichtung handelt es sich bevorzugt um eine Druckschicht, die Farbstoffe und/oder Merkmalsstoffe enthält. Bevorzugte Merkmalsstoffe sind Lumineszenzstoffe, wobei sowohl Lumineszenzstoffe, die unter Umgebungslicht wahrnehmbar sind, als auch Lumineszenzstoffe, die nur unter UV-Licht oder IR-Licht sichtbar sind, geeignet sind. Bevorzugt bilden die Farbstoffe und/ oder Merkmalsstoffe ein durchgehendes Muster, das sich über das Sicherheitselement und die übrigen Bereiche der Karte erstreckt. Das Muster kann auch nur bereichsweise vorgesehen werden, wobei der beschichtete Bereich der Kartenfolie zumindest teilweise mit dem Sicherheitselement überlappen muss. So erkennt der Betrachter eine durchgehende Musterung, die sich auch über das Sicherheitselement erstreckt. Manipulationen an der Karte werden so auf den ersten Blick dadurch erkennbar, dass in den Linien des Musters Versetzungen auftreten.

Das Sicherheitselement hat bevorzugt die Form eines Streifens oder Patches. Streifen haben typischerweise eine Breite von einigen Millimetern, Folienpatches oder sonstige flächige Sicherheitselemente eine Fläche im Bereich von etwa 0,5 cm² bis zu mehreren Quadratzentimetern. Dicken liegen im Bereich von 1 µm bis etwa 100 µm, wobei Dicken von 5 µm bis 50 µm bevorzugt sind. In diesem bevorzugten Dickenbereich sind die Sicherheitselemente bereits relativ stabil und daher einfach zu handhaben, aber gleichzeitig noch leicht in den Schichtaufbau der Karte zu integrieren. Bei dickeren Sicherheitselementen, insbesondere bei Sicherheitselementen mit einer Dicke von mehr als 100 µm, ist es bevorzugt, an der Stelle der Karte, an der das Sicherheitselement integriert werden soll, in einer oder mehreren Kartenfolien entsprechende Aussparungen oder Vertiefungen vorzusehen. Eine Alternative zur Anbringung dickerer Sicherheitselemente in einer Aussparung ist die Ausstattung des Sicherheitselements mit einer Stützschicht. Eine derartige Stützschicht kann eine Kunststofffolie sein, die gleichzeitig als Kernschicht des Kartenschichtaufbaus Verwendung findet, sich also über die gesamte Fläche der Karte erstreckt.

Die Kernschicht bzw. die Kernschichten einer Karte sind typischerweise opak oder mit einem Aufdruck versehen, dass sie undurchsichtig werden. Interessante optische Effekte können erzielt werden, wenn die Karte in dem Bereich, in dem sich das Sicherheitselement befindet, transparent oder zumindest transluzent ist. In diesem Fall sind die optischen Effekte von beiden Seiten her erkennbar, wobei je nach Schichtaufbau des Sicherheitselements gleiche oder unterschiedliche Effekte zu beobachten sind. Weist das Sicherheitselement eine opake Schicht mit Unterbrechungen, beispielsweise eine metallische Reflexionsschicht mit Unterbrechungen in Form von Schriftzeichen oder Mustern auf, können diese Unterbrechungen im Durchlicht geprüft werden, wodurch ein zusätzlicher Sicherheitseffekt erzielt wird.

Erfindungsgemäße Karten werden folgendermaßen hergestellt: Zunächst werden Sicherheitselemente hergestellt, wie sie vorstehend beschrieben wurden, bevorzugt in Form von Transferelementen auf einer Endlosbahn mit einer Vielzahl von Transferelementen. Transferelemente und Transferelementbahnen bzw. -Bänder sind an sich bekannt. Kennzeichnend für Transferbänder ist, dass die Sicherheitselemente auf einer Trägerschicht mit einem Schichtaufbau in umgekehrter Schichtfolge, wie sie später auf dem zu schützenden Gegenstand vorliegen soll, vorbereitet werden. Die Trägerschicht wird nach dem Transfer entweder von dem Schichtaufbau des Sicherheitselements abgezogen, oder verbleibt als Schutzschicht auf dem Sicherheitselement. Bei der vorliegenden Erfindung, bei der das Sicherheitselement zwischen zwei Kartenschichten eingebettet wird, wird die Trägerschicht entfernt.

Das erfindungsgemäß zu verwendende Sicherheitselement weist als Sicherheitsmerkmal mindestens die erwähnte Beugungsstruktur mit ersten und zweiten Bildelementen auf, die eine offene bzw. eine versteckte Darstellung (Bildinformation) erzeugen, bevorzugt auch noch weitere Merkmalsschichten, insbesondere eine Schicht mit Farbkippeffekt, wie einen Dünnschichtaufbau, und/oder eine lichtpolarisierende Schicht, wie eine Schicht aus nematischem Flüssigkristallmaterial. Bevorzugt bilden diese Merkmalsschichten ein Muster oder Motiv. Die Beugungsstruktur ist bevorzugt mit einer Metallisierung ausgestattet, die gemäß einer besonders bevorzugten Ausführungsform Unterbrechungen (Negativschrift) aufweist, die beispielsweise Schriftzeichen oder geometrische oder figürliche Muster bilden.

Die Sicherheitselemente haben, da es sich um flächige Elemente handelt, zwei im Vergleich zu ihren Stirnflächen große Oberflächen, im Folgenden "Hauptflächen" genannt. Auf eine der Hauptflächen wird ein physikalisch trocknender Klebstoff oder ein wärmevernetzbarer Klebstoff, insbesondere auf Wasserbasis, aufgetragen, bevorzugt im Tiefdruckverfahren, gegebenenfalls auf eine vorher auf die Hauptfläche des Sicherheitselements aufgetragene Primerschicht. Bei einem Sicherheitselement, das als Transferelement ausgebildet ist, wird der Klebstoff natürlich auf die Hauptfläche aufgetragen, auf der sich kein Transfersubstrat befindet. Dann wird das Sicherheitselement mit einer Kartenschicht verklebt, wobei auch auf die entsprechende Kartenschicht vorher ein geeigneter Primer aufgetragen werden kann. Im Falle eines wärmevernetzbaren Klebstoffs erfolgt die Verklebung unter erhöhter Temperatur, beispielsweise zwischen zwei erwärmten Platten oder Walzen, die gleichzeitig einen geringfügigen Druck auf das zu verklebende Material ausüben. Im Falle eines physikalisch trocknenden Klebstoffs wird der Klebstoff nach der Verklebung ausreichend lange trocknen lassen. Bei Transferelementen wird unmittelbar nach oder bevorzugt während der Verklebung das Transfersubstrat abgezogen.

Anschließend wird eine zweite Klebstoffschicht, wiederum aus einem physikalisch trocknenden Klebstoff oder einem wärmevernetzbaren Klebstoff, insbesondere auf Wasserbasis, auf die nicht verklebte Hauptfläche des Sicherheitselements aufgetragen. Alternativ kann diese Klebstoffschicht auch auf die Kartenschicht aufgetragen werden, die in der fertigen Karte das Sicherheitselement abdeckt. Der Klebstoff sollte dabei mindestens in einem Bereich aufgetragen werden, der der Fläche des Sicherheitselements entspricht. Bevorzugt ist die Fläche des Klebstoffs auf der Kartenfolie etwas größer als die entsprechende Hauptfläche des zu verklebenden Sicherheitselements. Gemäß einer weiteren Alternative kann die Klebstoffschicht auch vollflächig auf die Kartenfläche aufgetragen werden. Vor dem Auftragen des Klebstoffs kann jeweils ein Primer aufgetragen werden.

Dann wird das Sicherheitselement mit der Deckschicht oder einer Deckschicht der Karte verklebt. Anschließend oder gleichzeitig werden die beiden Kartenschichten, zwischen denen das Sicherheitselement eingebettet wird, miteinander verbunden. Zum Verbinden der beiden Kartenschichten können konventionelle Kaschierverfahren angewendet werden. Im Falle eines wärmevernetzbaren Klebstoffs ist es bevorzugt, das Verkleben des Sicherheitselements mit der Kartendeckschicht und das Verbinden der beiden Kartenschichten in einem Schritt durchzuführen, wobei im Bereich des Sicherheitselements eine niedrigere Temperatur und/oder ein niedrigerer Druck angewendet werden können als in den übrigen Bereichen der Karte. Die Temperatur muss natürlich auch im Bereich des Sicherheitselements hoch genug sein, um die Vernetzung des Klebstoffs zu initiieren.

Im Falle eines physikalisch trocknenden Klebstoffs wird zuerst das Sicherheitselement mit der Kartendeckfolie oder einer Kartendeckfolie verklebt, die Verklebung ausreichend lange trocknen lassen und dann ein konventionelles Kaschierverfahren zum Verbinden der Kartenfolien durchgeführt. Da das Sicherheitselement bereits mit der Kartendeckfolie verklebt ist, kann im Bereich des Sicherheitselements eine geringere Temperatur und/ oder ein geringerer Druck angewendet werden. Gemäß einer besonderen Ausführungsform wird der Klebstoff vollflächig auf die Kartendeckfolie, die in der fertigen Karte das Sicherheitselement abdeckt, aufgetragen. Bei wärmevernetzbaren Klebstoffen ist auf diese Weise eine Verbindung der Kartenfolien unter geringem Druck, und bei einer Temperatur, die zur Initiierung der Vernetzung des Klebstoffs ausreicht, möglich. Bei physikalisch trocknenden Klebstoffen kann das Verbinden der Kartenfolien mit dem dazwischen befindlichen Sicherheitselement ohne Erhöhung der Temperatur durchgeführt werden.

Hinsichtlich der Verbindung mit den übrigen Kartenfolien wird so vorgegangen, dass entweder zuerst das Sicherheitselement auf eine erste Kartenfolie aufgeklebt wird und dann diese Kartenfolie mit dem aufgeklebten Sicherheitselement und alle weiteren Kartenfolien gemeinsam zu einem Schichtverbund laminiert werden, oder dass zuerst ein Folienverbund hergestellt wird, dessen oberste Folie die mit dem Sicherheitselement zu verklebende Kartenfolie ist, darauf das Sicherheitselement aufgeklebt wird, und darauf dann die noch fehlende Folie oder die noch fehlenden Folien aufkaschiert wird (werden).

Gemäß einer bevorzugten Ausführungsform der erfindungsgemäßen Karte wird die Kartendeckfolie vor dem Laminieren an ihrer in der fertigen Karte inneren Oberfläche mit einem Muster ausgestattet, bevorzugt bedruckt, das in der fertigen Karte mindestens Teilbereiche des Sicherheitselements und angrenzende Teilbereiche der Deckfolie bedeckt. Wird das Sicherheitselement mit mehr als zwei Kartendeckschichten abgedeckt, wird bevorzugt die mit dem Sicherheitselement zu verklebende Kartendeckschicht bedruckt. Versuche, Sicherheitselement und Deckfolie zu trennen, führen auf diese Weise dazu, dass sowohl auf dem Sicherheitselement als auch auf der Deckfolie Musterspuren zu erkennen sind. Außerdem würden Versuche von Neukombinationen von Sicherheitselement und Kartenfolien zu Versetzungen in den Musterlinien führen. Derartige Muster werden bevorzugt mittels konventioneller Druckfarben aufgedruckt, alternativ auch mittels Drucktinten mit Lumineszenzpigmenten.

Die vorliegende Erfindung wird nachfolgend anhand von Figuren noch weiter veranschaulicht. Es wird darauf hingewiesen, dass die Figuren nicht maßstabs- und proportionsgetreu sind. Insbesondere sind alle Schichten stark überhöht dargestellt. Auch sind im Zusammenhang mit einer bestimmten Figur beschriebene Merkmale nicht auf die in der Figur beschriebene spezielle Merkmalskombination beschränkt, sondern können mit in anderen Figuren oder im allgemeinen Teil der Beschreibung beschriebenen Merkmalen kombiniert werden.

Es zeigen:
- Fig.1: eine Aufsicht auf eine erfindungsgemäße Karte mit einem eingebetteten Sicherheitselement, das für einen Betrachter eine offene und eine versteckte Darstellung (Bildinformation) erzeugt;
- Fig. 2a, 2b, 2c: jeweils Schnittansichten unterschiedlicher beispielhafter Kartenaufbauten, die mögliche Anordnungen eines Sicherheitselements im Kartenaufbau veranschaulichen;
- Fig. 3, 4, 5: jeweils Schnittansichten eines Sicherheitselements, das in eine erfindungsgemäße Karte einzubetten ist, entlang der Linie A-A' in Fig.1;
- Fig. 6: eine Schnittansicht einer besonders bevorzugten Ausführungsform eines Sicherheitselements, wie es in eine erfindungsgemäße Karte einzubetten ist, entlang der Linie A-A' in Fig. 1; und
- Fig. 7, 8, 9: jeweils Schnittansichten entlang der Linie A-A' in Fig.1, die die Herstellungsstadien einer erfindungsgemäßen Karte veranschaulichen, wobei Fig. 7 den Transfervorgang eines Sicherheitselements auf eine erste Kartenschicht zeigt und die Figuren 8 und 9 jeweils alternative Verklebungsvarianten mit einer zweiten Kartenschicht, einer Kartendeckschicht, zeigen.

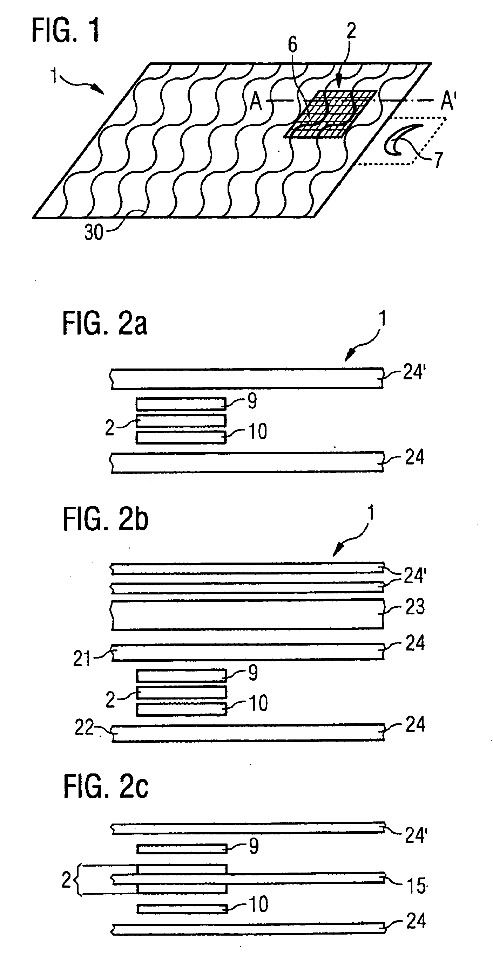

Fig.1 zeigt eine erfindungsgemäße Karte in Aufsicht. Die Karte 1 weist ein eingebettetes Sicherheitselement 2 auf. Das Sicherheitselement 2 weist eine Beugungsstruktur auf, die eine unter Umgebungsbedingungen, insbesondere bei Beaufschlagen mit Licht des sichtbaren Wellenlängenbereichs, visuell erkennbare Darstellung 6, hier ein Rautenmuster, sowie eine unter Umgebungsbedingungen visuell nicht erkennbare Darstellung 7, hier einen Mond, erzeugt. Die Darstellung 7 ist in Fig.1 als virtuelles Bild angedeutet, wobei die Darstellung 7 unter Einsatz einer geeigneten Lichtquelle, z.B. eines Lasers mit Laserlicht im roten Wellenlängenbereich, in der Regel auch auf eine geeignet ausgebildete Mattscheibe projiziert wird. Zusätzlich zeigt die Karte 1 einen Designdruck 30, der sich in Form eines Wellenmusters über die gesamte Kartenoberfläche einschließlich des Sicherheitselements 2 erstreckt. Der Designdruck 30 ist, in Fig.1 nicht erkennbar, auf die im Kartenaufbau innere Oberfläche der das Sicherheitselement abdeckenden Deckschicht der Karte aufgedruckt.

Die Figuren 2a, 2b und 2c zeigen Schnittansichten durch beispielhafte Kartenaufbauten. Gezeigt ist jeweils der Zustand vor dem Laminieren bzw. Verkleben, d. h. zwischen den einzelnen Schichten befinden sich Abstände, die natürlich in der fertigen Karte nicht mehr vorhanden sind. Fig. 2a zeigt die einfachste Version einer erfindungsgemäßen Karte 1. Die Karte 1 besteht nur aus zwei Deckfolien 24 und 24', zwischen denen das Sicherheitselement 2 eingebettet wird. Das Sicherheitselement 2 wird mittels der Klebstoffschicht 9 mit der Deckfolie 24' und mittels der Klebstoffschicht 10 mit der Deckfolie 24 verklebt. Bei der Karte 1 gemäß Fig. 2a kann es sich selbstverständlich auch um eine Verbundbanknote handeln, die, wie bereits erwähnt, vom Begriff "Karte" mit umfasst wird. Gleiches gilt für die weiter unten erläuterten Ausführungsformen gemäß Fig. 2b, 2c, 8 und 9.

Üblicherweise bestehen erfindungsgemäße Karten aus einer Vielzahl von Schichten, wie in Fig. 2b gezeigt. Bei der Ausführungsform gemäß Fig. 2b besteht der Aufbau der Karte 1 aus einer opaken Kernschicht 23, die an jeder Seite jeweils zwei Deckschichten 24, 24' aufweist. Ein Sicherheitselement 2 wird mittels einer Klebstoffschicht 9 mit einer ersten Kartenschicht 21 und mittels einer zweiten Klebstoffschicht 10 mit einer zweiten Kartenschicht 22 verklebt. In dem Ausführungsbeispiel sind die erste Kartenschicht 21 und die zweite Kartenschicht 22 die Deckschichten 24. Die zweite Kartenschicht 22 muss mindestens im Bereich des Sicherheitselements 2 transparent sein, damit das Sicherheitselement erkennbar ist. Alternativ könnte das Sicherheitselement 2 beispielsweise auch zwischen die Kartenschicht 21 und die Kernschicht 23 eingebettet werden, wobei dann entsprechend auch die Schicht 21 transparent sein müsste. Sind auch die Kernschicht sowie die beiden Deckschichten 24' mindestens im Bereich des Sicherheitselements 2 transparent, können die optischen Effekte des Sicherheitselements von beiden Kartenseiten her beobachtet werden.

Eine weitere Ausführungsform der erfindungsgemäßen Karte 1 ist in Fig. 2c gezeigt. Diese Karte besteht aus zwei Deckschichten 24,24', zwischen denen ein Sicherheitselement 2 eingebettet ist. Das Sicherheitselement weist eine Stützschicht 15 auf, die sich über die gesamte Fläche der Karte 1 erstreckt und als Kernschicht der Karte dient. Anstelle der Schichten 24 und 24' weist eine derartige Karte in der Regel jeweils mehrere Schichten auf.

Im Falle von dicken Sicherheitselementen, d. h. Sicherheitselementen mit einer Dicke von mehr als 50 µm und insbesondere mehr als 100 µm, sollte eine oder auch mehrere Schichten der Karte, je nach Dicke des Sicherheitselements, Vertiefungen oder Aussparungen im Bereich des einzubettenden Sicherheitselements aufweisen, um eine lückenlose Verbindung der Schichten ohne Beeinträchtigung der optischen Effekte der Sicherheitsmerkmale des Sicherheitselements 2 durch ein während des Laminiervorgangs auftretendes "Fließen" von Kartenfolien zu gewährleisten. Weist das Sicherheitselement 2 eine Stützschicht auf, wie in Fig. 2c gezeigt, sind in der Regel auch bei dicken Sicherheitselementen keine derartigen Vertiefungen oder Aussparungen erforderlich.

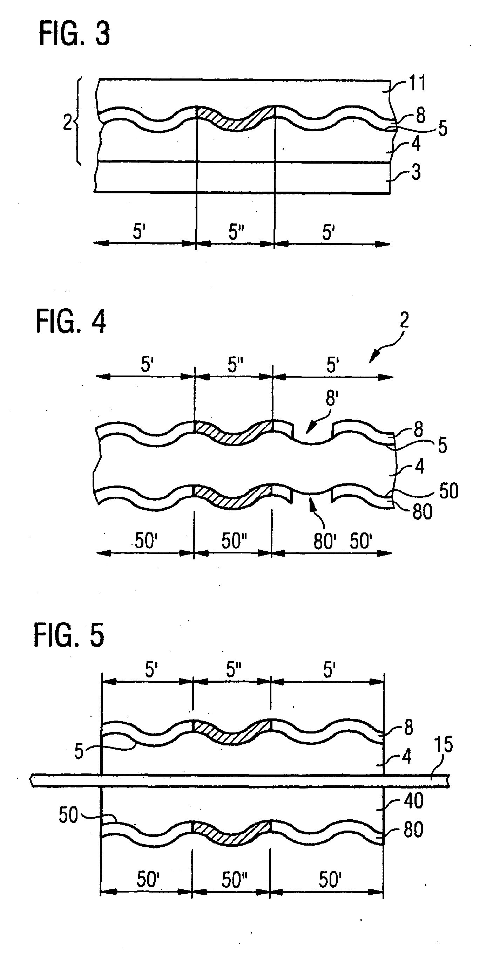

Es sei an dieser Stelle noch einmal angemerkt, dass als Klebstoff für sämtliche in der vorliegenden Anmeldung beanspruchten und offenbarten Gegenstände mit Vorteil der in der unveröffentlichten deutschen Patentanmeldung DE 10 2009 031877.1 offenbarte Klebstoff eingesetzt werden kann. So offenbart z.B. Fig. 4 und die zugehörige Beschreibung der DE 10 2009 031877.1 in erkennbarer Weise eine Ausweiskarte, bei der ein Sicherheitselement mit zwei Klebstoffschichten (4,4') zwischen zwei Kartensubstrate (10,10') einlaminiert ist, wie dies gemäß der vorliegenden Erfindung in analoger Weise für das Sicherheitselement (2), die Klebstoffschichten (9, 10) und die Kartensubstrate (24, 24') z.B. der Karten gemäß Fig. 2, 8 und 9 realisiert ist.

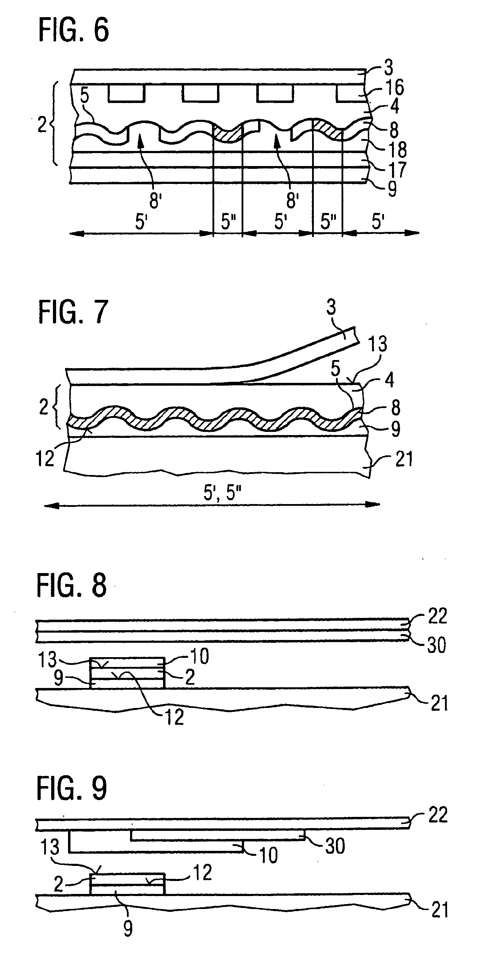

Fig. 3 zeigt eine Schnittansicht durch eine Ausführungsform eines Sicherheitselements, das zur Einbettung in eine erfindungsgemäße Karte 1 vorgesehen ist. Das Sicherheitselement 2 ist als Transferelement ausgebildet. Auf einem Transfersubstrat 3 befindet sich eine Prägelackschicht 4, die bevorzugt aus einem radikalisch oder kationisch härtenden UV-Lack besteht. In die Prägelackschicht 4 ist eine Beugungsstruktur 5 eingeprägt. Die Beugungsstruktur 5 weist zwei Bereiche mit voneinander verschiedenen Prägestrukturen auf. Die ersten Bereiche 5' weisen eine erste Prägung (erste Bildelemente) und zweite Bereiche 5", in denen sich eine zusätzliche Prägung (zweite Bildelemente) befinden, auf. Die zweite Prägung in Form der zweiten Bildelemente befindet sich also innerhalb der ersten Prägung, wobei, wie bereits erwähnt, unter dem Begriff "innerhalb" auch die in der WO 2005/ 038499 A2 beschriebenen Ausführungsformen fallen, bei denen die zweiten Bildelemente in nebengeordneten Flächenbereichen der ersten Bildelemente angeordnet sind, welche für die Darstellung der offenen Bildinformation von untergeordneter Bedeutung sind. Die zweite Prägung ist in Fig. 3 und den folgenden Figuren als Schraffierung dargestellt. Grundsätzlich ist anzumerken, dass die ersten Reliefbereiche 5' und die zweiten Reliefbereiche 5" auch vollständig zusammenfallen können, d. h. die erste Prägung (ersten Bildelemente) und die zweite Prägung (zweiten Bildelemente) sind im Wesentlichen deckungsgleich in der Kunststoff- oder Lackschicht 4 des Sicherheitselements angeordnet. Ein solches Sicherheitselement erzeugt im gesamten Bereich der geprägten Kunststoff- oder Lackschicht eine offene Bildinformation und mit einem geeigneten Hilfsmitte eine versteckte Bildinformation. Die vorstehenden Aussagen zur Überlappung von ersten und zweiten Reliefbereichen gelten für alle in dieser Anmeldung beschriebenen Ausführungsformen und sind exemplarisch in Fig. 7 gezeigt und erläutert. Umgekehrt können die ersten und zweiten Bildelemente aber auch ohne Überlapp, d.h. im Wesentlichen nebeneinander angeordnet sein. In der Ausführungsform der Fig. 3 wären dann z. B. die ersten Bildelemente im Wesentlichen ausschließlich im Reliefbereich 5' und die zweiten Bildelemente im Wesentlichen ausschließlich im Reliefbereich 5" angeordnet oder umgekehrt.

Die erste in Fig. 3 gezeigte Prägung ist durch erste Bildelemente gebildet und erzeugt eine unter Umgebungsbedingungen, z. B. Licht des sichtbaren Wellenlängenbereichs, visuell erkennbare erste Darstellung 6 (das Rautenmuster in Fig.1), und die zweite Prägung erzeugt eine unter Umgebungsbedingungen visuell nicht erkennbare zweite Darstellung 7 (den Mond in Fig.1). Prinzipiell stellt ein derartiges Sicherheitselement, das nur aus einer Prägelackschicht 4 mit eingeprägter Beugungsstruktur 5 besteht, bereits ein zur Einbettung in eine erfindungsgemäße Karte geeignetes Sicherheitselement 2 dar. In der Praxis weist das Sicherheitselement 2 weitere Schichten auf, wie eine Metallisierung 8, die beispielsweise durch physikalische Dampfabscheidung auf die Beugungsstruktur 5 aufgebracht werden kann. Die Metallisierung 8 kann auch durch eine geeignete hochbrechende Schicht, beispielsweise aus ZnSi oder TiO₂, ersetzt werden. In der dargestellten Ausführungsform weist das Sicherheitselement außerdem eine Schutzlackschicht 11 auf, wobei Schutzlackschichten mit hohem Brechungsindex ebenfalls die reflektierende Schicht, in Fig. 3 die Metallisierung 8, ersetzen können. Die Prägelackschicht 4 kann als Releaseschicht dienen. Alternativ kann zwischen dem Transfersubstrat 3 und der Prägelackschicht 4 auch eine zusätzliche Releaseschicht vorgesehen werden.

Fig. 4 zeigt eine Schnittansicht durch eine weitere Ausführungsform eines Sicherheitselements 2, das zur Einbettung in eine erfindungsgemäße Karte 1 vorgesehen ist. Das Sicherheitselement weist eine Kunststofffolie 4 auf, die an ihren Oberflächen mit Beugungsstrukturen 5 bzw. 50 ausgestattet ist. Die Beugungsstrukturen 5, 50 können gleich oder verschieden sein. Die Beugungsstruktur 5 weist erste Bereiche 5' mit ersten Bildelementen und zweite Bereiche 5" mit zweiten Bildelementen auf. Die Beugungsstruktur 50 weist erste Bereiche 50' mit ersten Bildelementen und zweite Bereiche 50" mit zweiten Bildelementen auf. Die Prägetiefe der zweiten Bildelemente in den zweiten Bereichen 5", 50" kann geringer als die Prägetiefe der Bildelemente in den ersten Bereichen 5', 50' sein. Derartige einander gegenüberliegende Reliefstrukturen können gleichzeitig erzeugt werden, indem die zu prägende Folie durch den Spalt zweier, einander gegenüberliegender Prägezylinder geführt wird. Die Reliefstrukturen 5, 50 sind jeweils mit Metallisierungen 8, 80 versehen. Die Metallisierung 8 weist Unterbrechungen (Negativschrift) 8' auf, und die Metallisierung 80 weist Unterbrechungen (Negativschrift) 80' auf, wobei die Unterbrechungen 8', 80' deckungsgleich sind. Wenn ein derartiges Sicherheitselement in einem Kartenaufbau angeordnet ist, der im Bereich des Sicherheitselements transparent ist, können die Unterbrechungen 8', 80' im Durchlicht geprüft werden. Die Bereiche 5', 50" sind in den Figuren ebenfalls deckungsgleich dargestellt, was aber nicht zwingend ist.

Fig. 5 zeigt eine Schnittansicht durch eine weitere Ausführungsform eines Sicherheitselements 2, das zur Einbettung in eine erfindungsgemäße Karte 1 vorgesehen ist. Dieses Sicherheitselement 2 weist eine Stützschicht 15 auf, die beidseitig mit einer Prägelackschicht 4, 40 beschichtet ist. In die Prägelackschichten 4, 40 sind jeweils Reliefstrukturen 5, 50 eingeprägt, wie sie bereits mehrfach beschrieben wurden. Auf den Reliefstrukturen 5, 50 befinden sich jeweils Metallisierungen 8, 80. Die Stützschicht 15 hat bevorzugt die Abmessungen der Karte 1, in die das Sicherheitselement 2 eingebettet werden soll. Sie kann gleichzeitig als Karten-Kernschicht dienen.

Fig. 6 zeigt eine Schnittansicht durch eine besonders bevorzugte Ausführungsform eines Sicherheitselements 2, das zur Einbettung in eine erfindungsgemäße Karte 1 vorgesehen ist. Das Sicherheitselement 2 ist als Transferelement ausgebildet und weist daher ein Transfersubstrat 3 auf. Auf dem Transfersubstrat 3 befindet sich ein Sicherheitsmerkmal, das lichtpolarisierende Effekte nutzt, nämlich eine in Motivform aufgebrachte Schicht 16 aus nematischen Flüssigkristallen. Zur Ausrichtung der Flüssigkristalle kann entweder das Transfersubstrat, beispielsweise eine Folie aus PET, geeignet strukturiert werden, beispielsweise durch Ätzen oder Einritzen, oder es kann eine separate Alignmentschicht zwischen dem Transfersubstrat und der Flüssigkristallschicht 16 vorgesehen werden. Auf der Flüssigkristallschicht 16 befindet sich eine Prägelackschicht 4, in die eine Beugungsstruktur 5 eingeprägt ist. Die Beugungsstruktur weist erste Bereiche 5' und zweite Bereiche 5" auf, wobei die ersten Bereiche 5' erste Bildelemente, und die zweiten Bereiche 5" zweite Bildelemente besitzen. Die Bildelemente der zweiten Bereiche 5" sind innerhalb der Bildelemente der ersten Bereiche 5' eingeprägt und erzeugen eine zweite Darstellung 7, die von einem Betrachter nicht ohne Hilfsmittel wahrgenommen werden kann, während die Bildelemente der ersten Bereiche 5' eine erste Darstellung 6 erzeugen, die von einem Betrachter unter Umgebungsbedingungen visuell wahrgenommen werden kann.

Auf der Prägelackschicht 4 befindet sich eine Metallisierung 8, beispielsweise eine durch physikalische Dampfabscheidung aufgebrachte Schicht aus Aluminium, Eisen, Kupfer, Gold, Nickel, etc. Die Metallisierung 8 weist Unterbrechungen 8' auf. Als weiteres optisches Sicherheitsmerkmal besitzt das Sicherheitselement 2 einen Dünnschichtaufbau 17, d. h. ein Sicherheitsmerkmal mit Farbkippeffekt. Der Dünnschichtaufbau 17 ist mittels einer Schicht 18 aus Kaschierklebstoff mit der Metallisierung 8 verbunden. Auf die Schicht 17 mit Farbkippeffekt wird zur Verklebung des Sicherheitselements 2 mit einer Kartenschicht eine Klebstoffschicht 9 aufgetragen.

Die Figuren 7 bis 9 veranschaulichen Vorgehensweisen zur Herstellung einer erfindungsgemäßen Karte 1, d. h. insbesondere die Vorgehensweise bei der Einbettung eines Sicherheitselements 2 zwischen zwei Kartenschichten 21, 22 der Karte 1. In Fig. 7 ist der Transfer eines einfachen Sicherheitselements 2 auf eine erste Kartenschicht 21 dargestellt. Das Sicherheitselement 2 besteht, wie bereits mehrfach beschrieben, aus einer Prägelackschicht 4 mit einer eingeprägten Beugungsstruktur 5, die erste Reliefbereiche 5' und zweite Reliefbereiche 5" aufweist, wobei die ersten und zweiten Reliefbereiche 5', 5"im gezeigten Beispiel zusammenfallen, d.h. die ersten und zweiten Bildelemente der Beugungsstruktur sind im Wesentlichen im gesamten Bereich der Prägelackschicht 4 des Sicherheitselements 2 angeordnet. D. h. die offene bzw. versteckte Bildinformation kann bei Beaufschlagung der Prägelackschicht mit jeweils geeignetem Licht im gesamten Reliefbereich 5', 5" erzeugt und für den Betrachter sichtbar gemacht werden. Die Beugungsstruktur 5 ist mit einer Metallisierung 8 ausgestattet. Das Sicherheitselement 2 ist auf einem Transfersubstrat 3 aufgebaut, und die Prägelackschicht 4 ist gleichzeitig als Releaseschicht ausgebildet. Zur Verklebung mit dem Schichtaufbau einer Karte wird auf eine der Hauptflächen 12,13 des Sicherheitselements die Metallisierung 8, ein Klebstoff 9 aufgetragen, bevorzugt im Tiefdruckverfahren. Bei dem Klebstoff handelt es sich um einen physikalisch trocknenden Klebstoff oder um einen wärmevernetzbaren Klebstoff, bevorzugt auf Wasserbasis. Zur Verklebung mit einer Kartenschicht wird das Sicherheitselement 2 mit der Klebstoffschicht 9 auf die entsprechende Kartenschicht aufgelegt und unter leichtem Druck, bei einem wärmevernetzbaren Klebstoff auch unter Erwärmung, mit der Kartenschicht verklebt. Typischerweise liegen das Kartenmaterial und das Sicherheitselement in Form von Endlosbahnen vor, die geeignet zusammengeführt und miteinander verklebt werden, beispielsweise in einem Walzenspalt. Das Transfersubstrat 3 wird üblicherweise während des Transfervorgangs abgezogen. Bei physikalisch trocknenden Klebstoffen kann es erforderlich sein, vor der weiteren Verarbeitung die Trocknung des Klebstoffs abzuwarten.

Das mit einer ersten Kartenschicht 21 verklebte Sicherheitselement 2 wird nun mit einer zweiten Kartenschicht 22 verklebt und dadurch in den Schichtaufbau der Karte 1 integriert. In den Figuren 8 und 9 wird diese Integration veranschaulicht, wobei das Sicherheitselement 2 jeweils nur noch schematisch dargestellt ist.

Fig. 8 zeigt das mit einer ersten Kartenschicht 21 mittels einer Klebstoffschicht 9 verklebte Sicherheitselement 2, auf dessen zweite Hauptfläche 13 eine zweite Klebstoffschicht 10 aufgetragen wurde, beispielsweise im Tiefdruckverfahren. Der Klebstoff der zweiten Klebstoffschicht 10 ist ebenfalls ein physikalisch trocknender Klebstoff oder ein wärmevernetzbarer Klebstoff, bevorzugt auf Wasserbasis. Das mit der zweiten Klebstoffschicht 10 ausgestattete Sicherheitselement 2 wird nun mit der zweiten Kartenschicht 22 zusammengeführt und unter leichtem Druck verklebt. Im Falle eines physikalisch trocknenden Klebstoffs werden anschließend noch die erste Kartenschicht 21 und die zweite Kartenschicht 22 mittels eines konventionellen Kaschierverfahrens unter erhöhtem Druck und erhöhter Temperatur miteinander laminiert. Im Falle eines wärmevernetzbaren Klebstoffs kann das Verkleben des Sicherheitselements 2 mit der zweiten Kartenschicht 22 und das Laminieren der Kartenschichten 21, 22 gleichzeitig durchgeführt werden Im Bereich des Sicherheitselements 2 können schonendere Laminierungsbedingungen gewählt werden, d. h. ein geringerer Druck und eine geringere Temperatur, ohne dass dadurch eine Beeinträchtigung der Verbundfestigkeit zu befürchten ist. Es können auch im gesamten Kartenbereich die gleichen Laminierungsbedingungen angewendet werden.

Alternativ kann die zweite Klebstoffschicht 10, wie in Fig. 9 gezeigt, auch auf die zweite Kartenschicht 22 aufgetragen werden, wobei die Auftragungsfläche bevorzugt etwas größer ist als die Größe des Sicherheitselements 2, um etwaige Ungenauigkeiten bei der Zusammenführung der zu verklebenden Schichten auszugleichen. Im Übrigen wird verfahren, wie im Zusammenhang mit Fig. 8 erläutert. Die zweite Klebstoffschicht 10 kann alternativ auch vollflächig auf die zweite Kartenschicht 22 aufgetragen werden. In diesem Falle ist eine besonders schonende Verklebung der ersten Kartenschicht 21 und der zweiten Kartenschicht 22 möglich.

Die das Sicherheitselement 2 bedeckende und schützende zweite Kartenschicht 22 ist bevorzugt eine transparente Folie. Zumindest muss die Folie im Bereich des Sicherheitselements 2 transparent sein. Gemäß einer bevorzugten Ausführungsform ist die zweite Kartenfolie 22 an ihrer mit dem Sicherheitselement 2 bzw. der ersten Kartenfolie 21 zu verbindenden Oberfläche vollflächig, wie in Fig. 8 dargestellt, oder zumindest in einem mit dem Sicherheitselement 2 überlappenden Bereich, wie in Fig. 9 dargestellt, mit einem Muster 30 bedruckt. Der Betrachter sieht ein Design, das sich ohne Unterbrechungen über das Sicherheitselement 2 und die benachbarte Kartenoberfläche erstreckt. In Fig. 1 ist das Design als Wellenmuster dargestellt. Anstelle des Designdrucks oder zusätzlich zu dem Designdruck kann ein Aufdruck mit Merkmalsstoffen aufgebracht werden, die bevorzugt nur unter UV-Licht oder IR-Licht sichtbar sind und bei Tageslicht vom Betrachter nicht wahrgenommen werden.

Die erfindungsgemäße Verklebung der Sicherheitselemente gestattet es erstmals, Sicherheitselemente mit hochempfindlichen Reliefstrukturen, wie sie die Reliefstrukturen, die "versteckte" Darstellungen erzeugen, sind, in eine mehrschichtige Karte einzulaminieren, ohne dass die hochempfindlichen Reliefstrukturen beim Laminieren der Karte beschädigt werden. Überraschenderweise wird durch die Verklebung mit den erfindungsgemäß verwendeten Klebstoffen sogar die Sichtbarkeit der optischen Sicherheitsmerkmale bzw. die Detektierbarkeit der versteckten Darstellung verbessert. Insgesamt wird dadurch eine erhöhte Fälschungssicherheit erzielt. Das Sicherheitselement mit einem Sicherheitsmerkmal, das eine versteckte Darstellung erzeugt, und bevorzugt mit zusätzlichen optischen Sicherheitsmerkmalen versehen ist, seine Einbettung in den Schichtaufbau einer Karte mittels der erfindungsgemäßen Verwendung eines speziellen Klebstoffs, der einerseits die Erkennbarkeit und Detektierbarkeit der Sicherheitsmerkmale verbessert und andererseits die Verankerung des Sicherheitselements im Schichtaufbau der Karte verbessert, führen in synergistischem Zusammenwirken zu einer Karte mit gegenüber bekannten Karten deutlich verbesserter Fälschungssicherheit.

## Patentansprüche

1. Karte (1), insbesondere Kreditkarte, Ausweiskarte, Bankkarte, oder sonstige Wertkarte, die mehrere miteinander laminierte Schichten aufweist, wobei zwischen einer ersten Kartenschicht (21) und einer zweiten Kartenschicht (22) ein Sicherheitselement (2) eingebettet ist, das eine Kunststoff- oder Lackschicht (4) mit einer Reliefstruktur (5), insbesondere einer Beugungsstruktur, aufweist,
wobei
- die Reliefstruktur (5) erste Reliefbereiche (5') mit ersten Bildelementen und zweite Reliefbereiche (5") mit zweiten Bildelementen aufweist, wobei die Bildelemente der ersten Reliefbereiche (5') eine unter Umgebungsbedingungen visuell erkennbare erste Darstellung (6) erzeugen,
und
- das Sicherheitselement (2) mit seinen beiden Hauptflächen (12,13) mittels einer ersten Klebstoffschicht (9) mit der ersten Kartenschicht (21) und mittels einer zweiten Klebstoffschicht (10) mit der zweiten Kartenschicht (22) verklebt ist **dadurch gekennzeichnet, dass** die Bildelemente der zweiten Reliefbereiche (5") eine unter Umgebungsbedingungen visuell nicht erkennbare zweite Darstellung (7) erzeugen, und dass die erste und die zweite Klebstoffschicht aus einem Klebstoff besteht, der gleich oder verschieden ist und ausgewählt ist aus der Gruppe, die aus physikalisch trocknenden Klebstoffen und wärmevernetzbaren Klebstoffen besteht, und dass
- wenn mindestens einer der Klebstoffe ein wärmevernetzbarer Klebstoff ist, die Vernetzungstemperatur des Klebstoffs geringer ist als die Erweichungstemperatur der Kunststoff- oder der Lackschicht (4) des Sicherheitselements (2), in der die Reliefstruktur (5) vorliegt.

2. Karte (1) nach Anspruch 1, **dadurch gekennzeichnet, dass** die Erweichungstemperatur der Kunststoff- oder der Lackschicht (4) des Sicherheitselements (2), in der die Reliefstruktur (5) vorliegt, höher ist als die Erweichungstemperatur der ersten (21) und der zweiten (22) Kartenschicht, zwischen denen das Sicherheitselement (2) eingebettet ist.

3. Karte (1) nach Anspruch 1 oder 2, **dadurch gekennzeichnet, dass** das Sicherheitselement (2) als weiteres Sicherheitsmerkmal eine Schicht (17) mit Farbkippeffekt, insbesondere einen Dünnschichtaufbau, aufweist.

4. Karte (1) nach einem der Ansprüche 1 bis 3, **dadurch gekennzeichnet, dass** das Sicherheitselement (2) als weiteres Sicherheitsmerkmal eine lichtpolarisierende Schicht (16), insbesondere eine Schicht mit nematischen Flüssigkristallen, aufweist.

5. Karte (1) nach einem der Ansprüche 1 bis 4, **dadurch gekennzeichnet, dass** die Reliefstruktur (5) der Kunststoff- oder Lackschicht (4) ein Prägehologramm ist.

6. Karte (1) nach einem der Ansprüche 1 bis 5, **dadurch gekennzeichnet, dass** die Reliefstruktur (5) der Kunststoff- oder Lackschicht (4) eine metallische Beschichtung (8) aufweist, wobei die metallische Beschichtung (8) bevorzugt visuell erkennbare Unterbrechungen (8') aufweist.

7. Karte (1) nach einem der Ansprüche 3 bis 6, **dadurch gekennzeichnet, dass** das Sicherheitselement (2) eine Kaschierschicht (18) zur Verbindung mit der Schicht (17) mit Farbkippeffekt aufweist.

8. Karte (1) nach einem der Ansprüche 1 bis 7, **dadurch gekennzeichnet, dass** die erste (9) und/oder die zweite (10) Klebstoffschicht Merkmalsstoffe enthält, und/oder dass die erste (9) und/oder die zweite (10) Klebstoffschicht auf einer Primerschicht aufgetragen ist, die gewünschtenfalls Merkmalsstoffe enthält.

9. Karte (1) nach einem der Ansprüche 1 bis 8, **dadurch gekennzeichnet dass** die erste (21) oder die zweite (22) Kartenschicht eine Außenschicht der Karte (1) ist, und die Außenschicht an ihrer Innenoberfläche zumindest in einem mit dem Sicherheitselement (2) teilweise überlappenden Bereich mit einem Muster (30) und/oder mit einer Schicht, die Merkmalsstoffe, bevorzugt in Musterform, enthält, ausgestattet ist.

10. Verfahren zur Herstellung einer Karte (1), insbesondere einer Kreditkarte, Ausweiskarte, Bankkarte oder sonstigen Wertkarte, die mehrere miteinander laminierte Schichten aufweist, wobei zwischen einer ersten Kartenschicht (21) und einer zweiten Kartenschicht (22) ein Sicherheitselement (2) eingebettet ist, das eine Kunststoff- oder Lackschicht (4) mit einer Reliefstruktur (5), insbesondere einer Beugungsstruktur, aufweist, folgende Schritte aufweisend:
a) Herstellen des Sicherheitselements (2), wobei die Herstellung das Einprägen der Reliefstruktur (5) in die Kunststoff- oder Lackschicht (4) umfasst, und wobei in ersten Reliefbereichen (5') erste Bildelemente, die eine unter Umgebungsbedingungen visuell erkennbare erste Darstellung (6) erzeugen, eingeprägt werden und in zweiten Reliefbereichen (5") zweite Bildelemente, die eine unter Umgebungsbedingungen visuell nicht erkennbare zweite Darstellung (7) erzeugen, eingeprägt werden,
b) Auftragen einer ersten Klebstoffschicht (9) auf eine der beiden Hauptflächen (12,13) des Sicherheitselements (2) und Verkleben des Sicherheitselements (2) mit der ersten Kartenschicht (21),
c1) Auftragen einer zweiten Klebstoffschicht (10) auf die andere der beiden Hauptflächen (12,13) des Sicherheitselements (2), oder
c2) Auftragen einer zweiten Klebstoffschicht (10) auf die zweite Kartenschicht (22) mindestens in einem mit dem einzubettenden Sicherheitselement (2) deckungsgleichen Bereich, und
d) Verkleben des mit der ersten Kartenschicht (21) verklebten Sicherheitselements (2) mit der zweiten Kartenschicht (22), und Verbinden der ersten (21) und der zweiten (22) Kartenschicht miteinander,
wobei die erste (9) und die zweite (10) Klebstoffschicht aus einem Klebstoff gebildet werden, der ausgewählt wird aus der Gruppe, die aus physikalisch trocknenden Klebstoffen und wärmevernetzbaren Klebstoffen besteht, und wobei,
wenn als mindestens einer der Klebstoffe ein wärmevernetzbarer Klebstoff gewählt wird, ein solcher Klebstoff gewählt wird, dessen Vernetzungstemperatur geringer ist als die Erweichungstemperatur der Kunststoff- oder Lackschicht (4) des Sicherheitselements (2), in die die Reliefstruktur (5) eingeprägt wurde.

11. Verfahren nach Anspruch 10, **dadurch gekennzeichnet, dass** das Sicherheitselement (2) als Transferelement mit einem Transfersubstrat (3) ausgebildet wird, und dass nach Schritt b) das Transfersubstrat entfernt wird.

12. Verfahren nach Anspruch 10 oder 11, **dadurch gekennzeichnet, dass** zur Verklebung in Schritt d) ein wärmevernetzbarer Klebstoff gewählt wird, und das Verkleben des Sicherheitselements (2) mit der zweiten Kartenschicht (22) und das Verbinden der ersten und der zweiten Kartenschicht miteinander gleichzeitig unter erhöhter Temperatur und erhöhtem Druck durchgeführt werden, wobei im Bereich des Sicherheitselements (2) bevorzugt eine niedrigere Temperatur und/oder ein niedrigerer Druck angewendet wird.

13. Verfahren nach Anspruch 10 oder 11, **dadurch gekennzeichnet, dass** zur Verklebung in Schritt d) ein physikalisch trocknender Klebstoff gewählt wird, und nach der Trocknung des Klebstoffs die erste (21) und die zweite (22) Kartenschicht durch Laminieren unter erhöhter Temperatur und erhöhtem Druck verbunden werden, wobei im Bereich des Sicherheitselements (2) bevorzugt eine niedrigere Temperatur und/ oder ein niedrigerer Druck angewendet wird oder ohne Erhöhung von Druck und Temperatur gearbeitet wird.

14. Verfahren nach einem der Ansprüche 10 bis 13, **dadurch gekennzeichnet, dass** das Sicherheitselement (2) mit mindestens einer weiteren Merkmalsschicht ausgestattet wird, insbesondere mit einer Schicht (17) mit Farbkippeffekt und/oder einer lichtpolarisierenden Schicht (16), und/oder dass die Reliefstruktur (5) des Sicherheitselements (2) als Prägehologramm ausgebildet wird und mit einer metallischen Beschichtung (8) ausgestattet wird, in die bevorzugt Unterbrechungen (8') eingebracht werden.

15. Verfahren nach einem der Ansprüche 10 bis 14, **dadurch gekennzeichnet, dass** die in dem Schichtaufbau der fertiggestellten Karte (1) weiter außen liegende Schicht der ersten (21) und der zweiten (22) Kartenschicht vor dem Laminieren an ihrer in der fertiggestellten Karte inneren Oberfläche mit einem Muster (30) und/oder mit einer Schicht, die Merkmalsstoffe, bevorzugt in Musterform, enthält, ausgestattet wird.

## Claims

1. A card (1), in particular a credit card, identification card, bank card or other value card, having several layers laminated with each other, wherein between a first card layer (21) and a second card layer (22) there is embedded a security element (2) having a plastic layer or lacquer layer (4) with a relief structure (5), in particular a diffractive structure, wherein
- the relief structure (5) has first relief areas (5') with first image elements and second relief areas (5") with second image elements, wherein the image elements of the first relief areas (5') produce a first representation (6) that is visually recognizable under ambient conditions, and
- the security element (2) with its two main faces (12, 13) is adhesively bonded with the first card layer (21) by means of a first adhesive layer (9), and with the second card layer (22) by means of a second adhesive layer (10),
**characterized in that**
- the image elements of the second relief areas (5") produce a second representation (7) that is not visually recognizable under ambient conditions, and **in that** the first and the second adhesive layer consists of an adhesive which is identical or different and is chosen from the group consisting of physically drying adhesives and adhesives crosslinkable by heat, and **in that**
- when at least one of the adhesives is an adhesive crosslinkable by heat, the crosslinking temperature of the adhesive is lower than the softening temperature of the plastic layer or the lacquer layer (4) of the security element (2) in which the relief structure (5) is present.

2. The card (1) according to claim 1, **characterized in that** the softening temperature of the plastic layer or the lacquer layer (4) of the security element (2) in which the relief structure (5) is present, is higher than the softening temperature of the first (21) and the second (22) card layers between which the security element (2) is embedded.

3. The card (1) according to claim 1 or 2, **characterized in that** the security element (2) has as further security feature a layer (17) with color-shift effect, in particular a thin film structure.

4. The card (1) according to any of the claims 1 to 3, **characterized in that** the security element (2) has as a further security feature a light-polarizing layer (16), in particular a layer with nematic liquid crystals.

5. The card (1) according to any of the claims 1 to 4, **characterized in that** the relief structure (5) of the plastic layer or lacquer layer (4) is an embossed hologram.

6. The card (1) according to any of the claims 1 to 5, **characterized in that** the relief structure (5) of the plastic layer or lacquer layer (4) has a metallic coating (8), wherein the metallic coating (8) preferably has visually recognizable gaps (8').

7. The card (1) according to any of the claims 3 to 6, **characterized in that** the security element (2) has a lining layer (18) for connection with the layer (17) with color-shift effect.

8. The card (1) according to any of the claims 1 to 7, **characterized in that** the first (9) and/ or the second (10) adhesive layer has feature substances, and/ or that the first (9) and/or the second (10) adhesive layer is applied to a primer layer which, if desired, contains feature substances.

9. The card (1) according to any of the claims 1 to 8, **characterized in that** the first (21) or the second (22) card layer is an outer layer of the card (1), and the outer layer on its inner surface is equipped, at least in an area partially overlapping with the security element (2), with a pattern (30) and/ or with a layer containing feature substances, preferably in the form of a pattern.

10. A method for producing a card (1), in particular a credit card, identification card, bank card or other value card having several layers laminated with each other, wherein between a first card layer (21) and a second card layer (22) there is embedded a security element (2) having a plastic layer or lacquer layer (4) with a relief structure (5), in particular a diffractive structure, having the following steps of:
a) manufacturing the security element (2), wherein the manufacture comprises the embossing of the relief structure (5) in the plastic layer or lacquer layer (4), and wherein there are embossed in first relief areas (5') first image elements that produce a first representation (6) that is visually recognizable under ambient conditions, and in second relief areas (5") second image elements which produce a second representation (7) that is not visually recognizable under ambient conditions,
b) applying a first adhesive layer (9) to one of the two main faces (12, 13) of the security element (2) and adhesively bonding the security element (2) with the first card layer (21),
c1) applying a second adhesive layer (10) to the other of the two main faces (12, 13) of the security element (2), or
c2) applying a second adhesive layer (10) to the second card layer (22) at least in an area that is congruent with the security element (2) to be embedded, and
d) adhesively bonding the security element (2) adhesively bonded with the first card layer (21) with the second card layer (22), and connecting the first (21) and the second (22) card layer with each other,
wherein the first (9) and the second (10) adhesive layer are formed from an adhesive chosen from the group consisting of physically drying adhesives and adhesives crosslinkable by heat, and wherein,
when as at least one of the adhesives there is chosen an adhesive crosslinkable by heat, such an adhesive is chosen whose crosslinking temperature is lower than the softening temperature of the plastic layer or lacquer layer (4) of the security element (2) in which the relief structure (5) was embossed.

11. The method according to claim 10, **characterized in that** the security element (2) is configured as a transfer element with a transfer substrate (3), and **in that** after step b) the transfer substrate is removed.

12. The method according to claim 10 or 11, **characterized in that** for the adhesive bonding in step d) an adhesive crosslinkable by heat is chosen, and **in that** the adhesive bonding of the security element (2) with the second card layer (22) and the connecting of the first and the second card layer with each other are carried out simultaneously under elevated temperature and elevated pressure, wherein in the area of the security element (2) preferably a lower temperature and/ or a lower pressure is applied.

13. The method according to claim 10 or 11, **characterized in that** for the adhesive bonding in step d) a physically drying adhesive is chosen, and after the drying of the adhesive the first (21) and the second (22) card layer are connected by lamination under elevated temperature and elevated pressure, wherein in the area of the security element (2) preferably a lower temperature and/ or a lower pressure is applied or no elevation of pressure and temperature takes place.

14. The method according to any of the claims 10 to 13, **characterized in that** the security element (2) is equipped with at least one further feature layer, in particular with a layer (17) with color-shift effect and/ or a light-polarizing layer (16), and/ or that the relief structure (5) of the security element (2) is configured as an embossed hologram and equipped with a metallic coating (8) in which preferably gaps (8') are formed.

15. The method according to any of the claims 10 to 14, **characterized in that** the layer of the first (21) and the second (22) card layer that lies further outside in the layer structure of the finished card (1) is equipped before lamination on its surface which is toward the inside in the finished card with a pattern (30) and/ or with a layer containing feature substances, preferably in the form of a pattern.

## Revendications

1. Carte (1), notamment carte de crédit, carte d'identité, carte bancaire ou autre carte de valeur, qui comporte plusieurs couches laminées les unes aux autres, un élément de sécurité (2) qui comporte une couche (4) de matière plastique ou de vernis pourvue d'une structure en relief (5), notamment d'une structure de diffraction, étant encastré entre une première couche de carte (21) et une seconde couche de carte (22),
- la structure en relief (5) comportant de premières zones en relief (5') avec de premiers éléments d'image et de secondes zones en relief (5") avec de secondes éléments d'image, les éléments d'image des premières zones en relief (5') générant une première représentation (6) reconnaissable visuellement sous des conditions ambiantes,
et
- l'élément de sécurité (2) étant collé par ses deux faces principales (12, 13) au moyen d'une première couche de colle (9) à la première couche de carte (21) et au moyen d'une seconde couche de colle (10) à la seconde couche de carte (22), **caractérisée en ce que** les éléments d'image des secondes zones en relief (5") génèrent une seconde représentation (7) non reconnaissable visuellement sous des conditions ambiantes, et **en ce que** la première et la seconde couche de colle consiste en une colle qui est pareille ou différente et est sélectionnée parmi un groupe composé de colles à séchage physique et de colles thermoréticulables,
et **en ce que**
- quand au moins une des colles est une colle thermoréticulable, la température de réticulation de la colle est inférieure à la température de ramollissement de la couche (4) de matière plastique ou de vernis de l'élément de sécurité (2) dans laquelle se trouve la structure en relief (5).

2. Carte (1) selon la revendication 1, **caractérisée en ce que** la température de ramollissement de la couche (4) de matière plastique ou de vernis de l'élément de sécurité (2) dans laquelle se trouve la structure en relief (5) est supérieure à la température de ramollissement de la première (21) et de la seconde (22) couche de carte entre lesquelles l'élément de sécurité (2) est encastré.

3. Carte (1) selon la revendication 1 ou 2, **caractérisée en ce que** l'élément de sécurité (2) comporte en tant que caractéristique de sécurité supplémentaire une couche (17) à effet de changement des couleurs par basculement, notamment une disposition en couche mince.

4. Carte (1) selon une des revendications de 1 à 3, **caractérisée en ce que** l'élément de sécurité (2) comporte en tant que caractéristique de sécurité supplémentaire une couche polarisant la lumière (16), notamment une couche à cristaux liquides nématiques.

5. Carte (1) selon une des revendications de 1 à 4, **caractérisée en ce que** la structure en relief (5) de la couche (4) de matière plastique ou de vernis est un hologramme gaufré.

6. Carte (1) selon une des revendications de 1 à 5, **caractérisée en ce que** la structure en relief (5) de la couche (4) de matière plastique ou de vernis comporte un revêtement métallique (8), le revêtement métallique(8) comportant de préférence des discontinuités (8') visuellement reconnaissables.

7. Carte (1) selon une des revendications de 3 à 6, **caractérisée en ce que** l'élément de sécurité (2) comporte une couche de doublage (18) pour la jonction avec la couche (17) à effet de changement des couleurs par basculement.

8. Carte (1) selon une des revendications de 1 à 7, **caractérisée en ce que** la première (9) et/ou la seconde (10) couche de colle comporte des substances caractéristiques, et/ou **en ce que** la première (9) et/ou la seconde (10) couche de colle est appliquée sur une couche d'apprêt dont il est souhaité qu'elle comporte des substances caractéristiques.

9. Carte (1) selon une des revendications de 1 à 8, **caractérisée en ce que** la première (21) ou la seconde (22) couche de carte est une couche extérieure de la carte (1), et la couche extérieure est équipée sur sa surface intérieure, au moins dans une zone se chevauchant partiellement avec l'élément de sécurité (2), d'un motif (30) et/ou d'une couche qui comporte des substances caractéristiques, de préférence sous forme de motif.

10. Procédé de fabrication d'une carte (1), notamment d'une carte de crédit, carte d'identité, carte bancaire ou autre carte de valeur, qui comporte plusieurs couches laminées les unes aux autres, un élément de sécurité (2) qui comporte une couche (4) de matière plastique ou de vernis pourvue d'une structure en relief (5), notamment d'une structure de diffraction, étant encastré entre une première couche de carte (21) et une seconde couche de carte (22), comportant les étapes suivantes :
a) fabrication de l'élément de sécurité (2), la fabrication comprenant le gaufrage de la structure en relief (5) dans la couche (4) de matière plastique ou de vernis, et de premiers éléments d'image qui génèrent une première représentation (6) reconnaissable visuellement sous des conditions ambiantes étant gaufrés dans de premières zones en relief (5') et de seconds éléments d'image qui génèrent une seconde représentation (7) non reconnaissable visuellement sous des conditions ambiantes étant gaufrés dans de secondes zones en relief (5"),
b) application d'une première couche de colle (9) sur une des deux faces principales (12, 13) de l'élément de sécurité (2) et collage de l'élément de sécurité (2) avec la première couche de carte (21),
c1) application d'une seconde couche de colle (10) sur l'autre des deux faces principales (12, 13) de l'élément de sécurité (2), ou
c2) application d'une seconde couche de colle (10) sur la seconde couche de carte (22) au moins dans une zone congruente avec l'élément de sécurité (2) à encastrer, et
d) collage, à la seconde couche de carte (22), de l'élément de sécurité (2) collé avec la première couche de carte (21), et jonction de la première (21) et de la seconde (22) couche de carte l'une avec l'autre,
la première (9) et la seconde (10) couche de colle étant constituées par une colle qui est sélectionnée parmi un groupe composé de colles à séchage physique et de colles thermoréticulables, et
quand c'est une colle thermoréticulable qui est choisie en tant qu'au moins une des colles, il est alors choisi une colle dont la température de réticulation est inférieure à la température de ramollissement de la couche (4) de matière plastique ou de vernis de l'élément de sécurité (2) dans laquelle la structure en relief (5) a été gaufrée.

11. Procédé selon la revendication 10, **caractérisée en ce que** l'élément de sécurité (2) est réalisé en tant qu'élément de transfert avec un substrat de transfert (3), et **en ce que** le substrat de transfert est enlevé après l'étape b).

12. Procédé selon la revendication 10 ou 11, **caractérisée en ce que**, pour le collage à l'étape d), il est choisi une colle thermoréticulable, et **en ce que** le collage de l'élément de sécurité (2) à la seconde couche de carte (22) et la jonction de la première et de la seconde couche de carte l'une avec l'autre sont effectués simultanément à température élevée et pression élevée, une température inférieure et/ou une pression inférieure étant de préférence employée dans la zone de l'élément de sécurité (2).

13. Procédé selon la revendication 10 ou 11, **caractérisée en ce que**, pour le collage à l'étape d), il est choisi une colle à séchage physique, et **en ce que**, après le séchage de la colle, la première (21) et la seconde (22) couche de carte sont jointes par laminage à température élevée et pression élevée, une température inférieure et/ou une pression inférieure étant de préférence employée dans la zone de l'élément de sécurité (2) ou l'usinage étant effectué sans augmentation de pression et température.

14. Procédé selon une des revendications de 10 à 13, **caractérisée en ce que** l'élément de sécurité (2) est équipé d'au moins une couche caractéristique supplémentaire, notamment d'une couche (17) à effet de changement des couleurs par basculement et/ou d'une couche polarisant la lumière (16), et/ou en ce que la structure en relief (5) de l'élément de sécurité (2) est réalisée sous forme d'hologramme gaufré et est équipée d'un revêtement métallique (8) dans lequel sont de préférence pratiquées des discontinuités (8').

15. Procédé selon une des revendications de 10 à 14, **caractérisée en ce que** la couche qui, de la première (21) et de la seconde (22) couche de carte, se trouve davantage à l'extérieur dans la disposition en couche mince de la carte achevée (1) est, avant le laminage, équipée, sur sa surface intérieure dans la carte achevée, d'un motif (30) et/ou d'une couche qui comporte des substances caractéristiques, de préférence sous forme de motif.
